# DEMANDE DE BREVET EUROPEEN

(11) **EP 3 628 590 A1**
(43) Date de publication de la demande: **01.04.2020**
(21) Numéro de dépôt: 19199717.0
(22) Date de dépôt: 26.09.2019
(51) Int. Cl.: B64C 21/02, B64D 15/04, B64D 33/02, F02C 7/045, F02C 7/047

(54) **DISPOSITIF DE RÉDUCTION VOIRE DE SUPPRESSION DU BRUIT TONAL POUR SYSTÈME DE DÉGIVRAGE DE GROUPE PROPULSIF D'AÉRONEF**

(30) Priorité: 28.09.2018 FR 1859021
(71) Demandeur: Airbus Operations, 31060 Toulouse (FR)
(72) Inventeur: FARGIER, Thierry, 31170 Tournefeuille (FR); LE-FLEM, Franck, 31480 Lagraulet Saint Nicolas (FR)
(74) Mandataire: Santarelli

(57) **Abrégé**

L'invention concerne un dispositif pour un système de dégivrage de groupe propulsif d'aéronef permettant de réduire voire de supprimer un bruit tonal généré par un écoulement d'air (16) le long d'une surface présentant un orifice (13) débouchant sur une cavité (11) s'étendant du côté opposé à cette surface, l'orifice (13) présentant une arête aval (19) par rapport au sens d'écoulement de l'air (16). Le dispositif comprend un déflecteur (18) positionné au bord de l'arête aval (19), s'étendant vers l'intérieur de la cavité (11), et orienté perpendiculairement à la direction d'écoulement de l'air (16) afin de dévier vers l'extérieur de l'orifice (13) des tourbillons (17) formés dans la couche de cisaillement due à l'écoulement de l'air (16) le long de la surface au droit de chaque orifice (13).

L'installation d'un déflecteur au niveau de l'arête aval de chaque orifice d'échappement du système de dégivrage, permet de rediriger les tourbillons en dehors de la cavité en évitant que ceux-ci soient fortement déformés au passage de l'arête aval. Ainsi, le bruit généré par la déformation des tourbillons au passage de l'arête aval est supprimé ou tout au moins fortement réduit.

## Description

L'invention concerne les groupes propulseurs d'aéronef et plus particulièrement un système de dégivrage installé dans la lèvre d'une nacelle de groupe propulsif.

Les aéronefs commerciaux présentent des groupes propulseurs le plus souvent suspendus sous la voilure ou fixés en partie arrière de fuselage. Ces groupes propulseurs présentent généralement une motorisation implantée à l'intérieur d'une nacelle fixée à la voilure ou au fuselage de l'aéronef par un mât de support dont une extrémité est reliée à la paroi extérieure de la nacelle et dont l'autre extrémité est reliée à la voilure ou au fuselage. Dans la suite les positions axiales des différents composants du groupe propulsif sont indiquées par rapport à la direction du flux d'air le traversant.

En partie avant de la nacelle se trouve une entrée d'air débouchant sur un conduit intérieur constitué par une paroi intérieure de la nacelle. Le conduit intérieur canalise l'air vers la motorisation qui peut-être, par exemple, un turbopropulseur. L'entrée d'air est munie d'une lèvre dont le bord intérieur rejoint le conduit intérieur et le bord extérieur rejoint la paroi extérieure de la nacelle. Cette lèvre a une fonction aérodynamique qui consiste à capter l'air sans générer de décollements, ces derniers étant nuisibles à la durée de vie des pâles de la soufflante.

Durant les phases de vol, du givre ou de la glace peuvent se former au niveau de l'entrée d'air de la motorisation. L'accumulation de glace en amont de la motorisation peut nuire considérablement aux performances de groupe propulsif et dans des cas extrêmes des morceaux de glace peuvent se détacher et être aspirés dans le conduit intérieur et venir endommager la motorisation ce qui nécessite des opérations de maintenance supplémentaires. Pour éviter la formation de givre ou de glace un système de dégivrage est implanté dans la lèvre.

En général, l'entrée d'air est une partie spécifique du groupe propulsif se terminant en aval par un cadre arrière rigidifiant la structure. A l'autre extrémité de l'entrée d'air, se trouve une canalisation périphérique dont la section a une forme en D, appelée plus communément sous sa dénomination anglophone « D-duct ». Le D-duct est formé sur sa partie avant par la lèvre et sur sa partie arrière par un cadre avant qui ferme la concavité formée sur l'arrière de la lèvre. De l'air chaud amené du moteur par une conduite de dégivrage circule dans le D-duct prévenant ainsi la formation de givre. Ce système de dégivrage pneumatique est couramment utilisé dans les systèmes de dégivrage de nacelle aussi appelés plus communément sous sa dénomination anglophone « Nacelle Anti Ice » ou système NAI. Les systèmes NAI pneumatiques présentent des orifices d'échappement permettant à l'air chaud pressurisé dans le D-duct de s'échapper vers l'extérieur et un système de régulation contrôlant l'injection d'air chaud dans le D-duct. Le système NAI peut-être en mode actif lorsque les conditions de vol imposent un dégivrage des lèvres des entrées d'air du système de propulsion ou en mode inactif dans le cas contraire.

Lorsque le système de dégivrage est en mode inactif, un bruit tonal ou sifflement peut apparaître ce qui d'une part peut augmenter le niveau de bruit certifié de l'aéronef et d'autre part peut provoquer des nuisances sonores, sous la forme d'un sifflement, pouvant être entendues jusqu'à plusieurs dizaines de kilomètres de l'aéroport notamment lors de la phase d'approche avant l'atterrissage.

Ce sifflement est le résultat du couplage d'un système excitateur/ résonateur. Lorsque le système NAI est en mode inactif le D-duct se comporte comme une cavité qui communique avec l'extérieur uniquement par les orifices d'échappement. L'écoulement de l'air passant au droit des orifices d'échappement va produire par cisaillement des tourbillons qui vont avoir tendance à être déformés lorsqu'ils rencontrent l'arête aval de ces orifices d'échappement. La vitesse de déformation de ces structures tourbillonnaires va générer du bruit. Ce bruit peut devenir tonal si une boucle rétroactive arrive à s'établir entre l'émission du bruit et les lâchers tourbillonnaires. Cette boucle rétroactive est le résultat de l'utilisation de l'énergie acoustique émise lors de la déformation des tourbillons sur l'arête aval des orifices pour agir sur les lâchers tourbillonnaires générés depuis l'arête amont et les cadencer. Ce bruit tonal, appelé excitateur, peut alors exciter un mode de cavité du D-duct qui impose alors sa fréquence, dite de résonance, avec un effet amplificateur, appelé résonateur. La fréquence et l'intensité de ce sifflement dépend de la géométrie des orifices d'échappement, des modes de cavité du D-duct et des conditions locales d'écoulement de l'air au niveau des orifices d'échappement.

L'invention a pour objet de réduire, voire de supprimer, le bruit tonal excitateur généré au niveau de chaque orifice d'échappement communiquant avec la cavité formée par le D-duct lorsque le système NAI est inactif.

A cette fin, l'invention propose un système de dégivrage de groupe propulsif d'aéronef, implanté dans une lèvre entourant une entrée d'air d'un groupe propulsif, ladite lèvre s'étendant entre une paroi extérieure d'une nacelle du groupe propulsif et un conduit intérieur canalisant l'air vers une soufflante disposée en aval de l'entrée d'air du groupe propulsif, ledit système comportant : une canalisation périphérique constituée par une cavité formée dans ladite lèvre, disposée autour du conduit intérieur du groupe propulsif et adaptée à assurer la circulation autour de l'entrée d'air d'un flux de gaz chaud qui y est injecté ; au moins un orifice formé sur une paroi latérale de ladite canalisation et par lequel ledit flux de gaz chaud pressurisé s'en échappe vers l'air s'écoulant le long de la paroi extérieure ou du conduit interne du groupe propulsif.

Le système de dégivrage comprend en outre un déflecteur positionné au bord d'une arrête aval de l'orifice par rapport au sens d'écoulement de l'air. Le déflecteur s'étend vers l'intérieur de la canalisation, étant orienté perpendiculairement à la direction générale d'écoulement de l'air et formant un angle par rapport à ladite paroi latérale de la canalisation le long de laquelle s'écoule l'air, afin de dévier vers l'extérieur dudit orifice des tourbillons formés dans la couche de cisaillement de l'air au droit de chaque orifice.

L'installation d'un déflecteur au niveau de l'arête aval de chaque orifice permet de rediriger les tourbillons en dehors de la cavité en évitant que ceux-ci soient fortement déformés au passage de l'arête aval. Ainsi, le bruit généré par la déformation des tourbillons au passage de l'arête aval est supprimé ou tout au moins fortement réduit. Ainsi la boucle rétroactive entre les deux arêtes de l'orifice ne pourra que difficilement s'établir pour produire un bruit tonal susceptible d'exciter un mode de cavité du D-duct lorsque le système NAI est inactif. En outre, la cavité du D-duct ne parviendra pas à entrer en résonance ou du moins aura une résonance avec un niveau sonore fortement réduit.

Avantageusement, l'angle et la hauteur dudit déflecteur par rapport à ladite paroi latérale de la canalisation sont définis pour minimiser la déformation des tourbillons lorsqu'ils rencontrent l'arête avale, et l'effet d'obturation dudit orifice.

Ainsi, les caractéristiques géométriques dudit déflecteur réduisent l'occurrence d'une perte de débit d'air chaud lorsque le système de dégivrage est actif qui peut affecter l'efficacité du système de dégivrage.

De préférence, la hauteur du déflecteur est supérieure ou égale au diamètre des plus gros tourbillons lorsque mesuré perpendiculairement à la direction générale d'écoulement de l'air.

De préférence, que l'angle formé par le déflecteur avec ladite paroi latérale de la canalisation a une valeur comprise entre 0° et 90°, préférablement 45°.

Dans une configuration particulièrement avantageuse, le déflecteur enveloppe l'orifice sur un tiers à un demi de son pourtour.

De préférence, le déflecteur a une forme incurvée correspondant à la forme de la partie de l'orifice qu'il enveloppe et/ou présente un renfort formé à sa base.

Avantageusement, le déflecteur est riveté et collé directement sur une surface intérieure de la paroi latérale de la canalisation périphérique au travers de laquelle est formé l'orifice.

De préférence, plusieurs déflecteurs sont formés sur une plaque montée en relation d'un groupement de plusieurs orifices.

Avantageusement, le ou les orifices sont généralement situés sur la paroi extérieure et/ou sur la partie externe de la lèvre du groupe propulsif.

Un second aspect de l'invention concerne un groupe propulsif d'aéronef comprenant une motorisation implantée dans une nacelle qui présente une entrée d'air pourvue d'une lèvre s'étendant entre une paroi extérieure et une paroi intérieure de la nacelle. La paroi intérieure forme un conduit intérieur canalisant l'air vers la motorisation disposée en aval de l'entrée d'air. Le groupe propulsif comprend en outre un système de dégivrage tel que défini ci-dessus.

Un troisième aspect de l'invention concerne un aéronef comprenant au moins un groupe propulsif tel que défini ci-dessus.

D'autres caractéristiques et avantages de l'invention sont mis en évidence par la description ci-après d'exemples non-limitatifs de réalisation des différents aspects de l'invention. La description se réfère aux figures annexées qui sont aussi données à titre d'exemple de réalisation non-limitatifs de l'invention :
- la figure 1 représente une vue en perspective d'un groupe propulsif de type turbopropulseur ;
- la Figure 2 représente une vue de détail en coupe de l'entrée d'air du groupe propulsif ;
- la figure 3 représente une vue schématique de la formation des tourbillons au droit des orifices et de leur traitement pour éviter ou du moins réduire significativement la génération d'un bruit tonal ;
- la figure 4 montre une vue de détail en perspective et en coupe d'un déflecteur selon l'invention ;
- la figure 5 montre une vue en perspective d'une variante de l'invention où les déflecteurs sont regroupés sur une plaque ; et
- La figure 6 montre un aéronef équipé de groupes propulsifs selon l'invention.

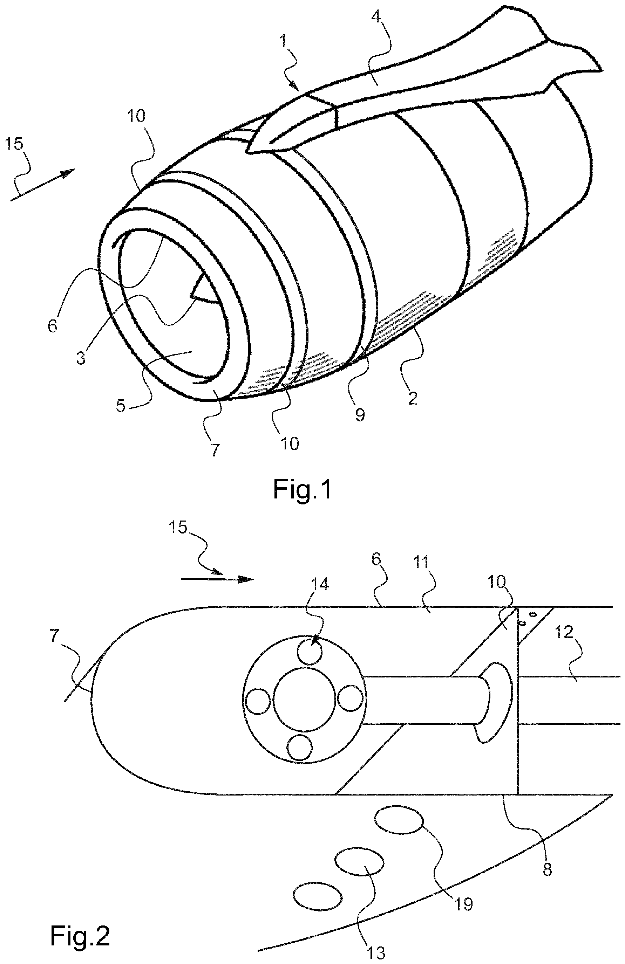

La Figure 1 représente un groupe propulsif pour aéronef du type turboréacteur. Dans la suite les positions axiales relatives des composants du groupe propulsif 1 et des différents systèmes et dispositifs qui seront décrits, seront indiquées par rapport à la direction générale 15 de l'air s'écoulant au travers du groupe propulsif 1 et le long de ses surfaces externes.

Typiquement ce type de groupe propulsif pour aéronef commerciaux comporte une nacelle 2 dans laquelle est implantée une motorisation 3. La nacelle 2 est généralement suspendue sous la voilure ou fixée en partie arrière de fuselage par un mât de support 4.

En partie avant de la nacelle 2 se trouve une entrée d'air 6 débouchant sur un conduit intérieur 5 constitué par une paroi intérieure de la nacelle entourant la motorisation 3. Le conduit intérieur 5 canalise l'air vers la motorisation 3. L'entrée d'air 6 est munie d'une lèvre 7 dont le bord intérieur rejoint le conduit intérieure 6 et le bord extérieur rejoint une paroi extérieure 8 de la nacelle. Cette lèvre 7 a une fonction aérodynamique qui consiste à capter l'air sans générer de décollements, ces derniers étant nuisibles à la durée de vie des pâles de la soufflante.

Durant les phases de vol, du givre ou de la glace peuvent se former au niveau de l'entrée d'air 6. L'accumulation de glace en amont de la motorisation 3 peut nuire considérablement aux performances de groupe propulsif 1 et dans des cas extrêmes des morceaux de glace peuvent se détacher, être aspirés dans le conduit intérieur 5 et venir endommager les composants de la motorisation tels que des aubes d'une soufflante de la motorisation 3. Pour éviter la formation de givre ou de glace sur les aéronefs commerciaux, un système de dégivrage est implanté dans la lèvre 7.

En général, comme montré sur la figure 2, l'entrée d'air 6 à l'avant de la nacelle 2 comporte à son extrémité aval un cadre arrière 9 rigidifiant la structure. A son extrémité amont l'entrée d'air, présente une canalisation périphérique annulaire dont la section a une forme en D, appelée communément sous sa dénomination anglophone « D-duct » 11. Le D-duct 11 est formé sur sa partie avant par la lèvre 7 et sur sa partie arrière par un cadre avant 10 positionné en amont du cadre arrière 9 de rigidification. Le cadre avant 10 obture par l'arrière la concavité formée à l'intérieur de la lèvre 7. Celle-ci est habituellement constituée par plusieurs secteurs en aluminium relié entre eux par des éclisses. La lèvre 7 est dégivrée, lorsque nécessaire, par un système de dégivrage pneumatique aussi appelé Nacelle Anti-Ice ou système NAI. Dans un système NAI pneumatique, de l'air chaud, qui est prélevé sur les étages supérieurs de compression de la motorisation 3, est amené par des conduites de dégivrage 12 dans le D-duct 11 où il y est injecté par des tuyères 14 pour prévenir la formation de givre. Des vannes sont installées sur les conduites de dégivrage 12 pour réguler l'arrivée du gaz chaud dans le NAI, notamment en pression et en débit. Les systèmes NAI pneumatiques présentent des orifices 13 permettant à l'air chaud pressurisé dans le D-duct 11 de s'échapper vers l'extérieur. Ces orifices 13 d'échappement sont généralement situés sur la paroi extérieure 8 et/ou sur la partie externe de la lèvre 7 de la nacelle 2 du groupe propulsif 1 pour éviter que lorsque le système de dégivrage est actif, l'air chaud sortant des orifices 13 ne soit capté par l'entrée d'air du groupe propulsif 1 et n'affecte de ce fait la qualité de l'écoulement ainsi capté en ajoutant une distorsion locale et des gradients de température. Le système NAI peut-être en mode actif lorsque les conditions de vol imposent un dégivrage des lèvres du système propulsif ou en mode inactif si ce n'est pas le cas.

En mode inactif, les vannes contrôlant le débit et la pression du fluide chaud dans le D-duct 11 ferment l'arrivée de gaz chaud. Il en résulte que dans ce mode et en absence de la surpression générée par l'échappement du gaz chaud, le D-duct 11 se comporte comme une cavité dans laquelle débouche les orifices 13 et un bruit tonal peut apparaître et avoir un impact négatif sur les niveaux de bruit certifiés de l'aéronef. Ce bruit tonal peut provoquer des nuisances sonores audibles jusqu'à des dizaines de kilomètres de l'aéroport notamment lors de la phase d'approche précédant l'atterrissage. Une analyse des turbulences présentes dans l'écoulement de l'air au niveau des orifices 13 met en évidence des lâchés tourbillonnaires au droit des orifices qui viennent alors impacter l'arête aval 19 de ceux-ci avant de se dissiper principalement dans le D-duct.

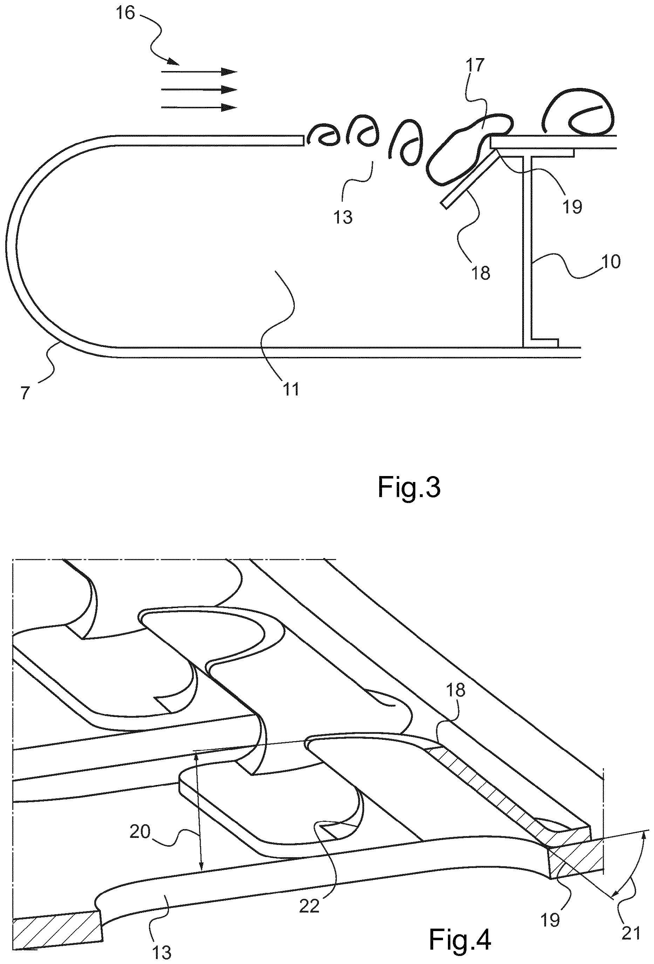

Comme illustré sur la figure 3, le flux d'air 16 s'écoulant le long de la surface où débouchent les orifices 13 génère des tourbillons 17 au droit de ces orifices 13. Ces tourbillons 17 grossissent par effet de cisaillement et pénètrent partiellement ou entièrement dans la cavité formée par le D-duct 11. Un déflecteur 18 est positionné sur l'arête aval 19 de chaque orifice 13 et est orienté de façon à dévier systématiquement les tourbillons 17 en dehors du D-duct 11 tout en minimisant leur déformation. Ceci a pour effet de générer peu ou pas de bruit au passage de l'arête aval 19. Ainsi une boucle rétroactive ne pourra pas ou que difficilement s'établir, ce qui empêchera la production du bruit tonal susceptible d'exciter un mode de cavité du D-duct ou du moins la résonance de cavité résultante sera de moindre intensité. Dans le cas d'un système NAI, le déflecteur 18 est placé à l'intérieur du D-duct 11 formé dans la lèvre 7. L'angle et la hauteur du déflecteur doivent être adaptés pour dévier les tourbillons 17 hors du D-duct 11 tout en minimisant leur déformation au passage de l'arête aval 19 des orifices 13. Les tourbillons grossissent dans la couche de cisaillement formée par l'écoulement de l'air (16) jusqu'à atteindre l'arête aval 19. Il faut éviter que ces tourbillons ne rencontrent une arête vive ou de faible épaisseur au regard de la taille des tourbillons afin de ne pas favoriser une déformation rapide de ces tourbillons qui est responsable d'une émission sonore accrue dans ce cas.

La figure 4 illustre un exemple de réalisation du déflecteur 18. Pour un orifice de 30 mm de diamètre, les tourbillons atteignent une taille d'environ 6 mm ce qui nécessite une hauteur 20 de déflecteur au moins égale à la taille des plus gros tourbillons lorsque mesurée dans la direction normale à la paroi du D-duct 11 dans laquelle l'orifice 13 est formé. Un angle 21 formé par le déflecteur par rapport à ladite paroi du D-duct est fixé à 45°. Cet angle 21 du déflecteur 18 peut prendre des valeurs comprises entre 0° et 90° en fonction du bénéfice recherché entre minimiser la déformation des tourbillons au passage de l'arête aval 19, en choisissant une valeur d'angle inférieure à 45°, et minimiser la perte de charge à la traversée de l'orifice 13 lorsque l'air chaud du système de dégivrage s'évacue à travers celui -ci, en choisissant une valeur d'angle supérieure à 45°. La forme du déflecteur 18 doit envelopper suffisamment l'ouverture de l'orifice afin de couvrir tous les cas d'incidence locale de l'écoulement. Par exemple, le déflecteur 18 pourra envelopper l'orifice 13 sur plus ou moins 1/3 à 1/2 du pourtour de celui-ci. D'où une forme incurvée du déflecteur. De plus, un renfort 22 en forme d'arc de cercle est formé sur à la base des ailes du déflecteur enveloppant les parties latérales des orifices 13 afin de guider les tourbillons vers la rampe formée par le déflecteur 18. Le renfort 22 peut également avoir une fonction de rigidification de l'ensemble. D'autres formes pour ce renfort sont possibles dans la mesure où la fonction de guidage des tourbillons vers la rampe formée par le déflecteur est assurée. Ce renfort 22 peut également être omis s'il s'avère qu'un guidage des tourbillons ou un renforcement mécanique n'est pas nécessaire.

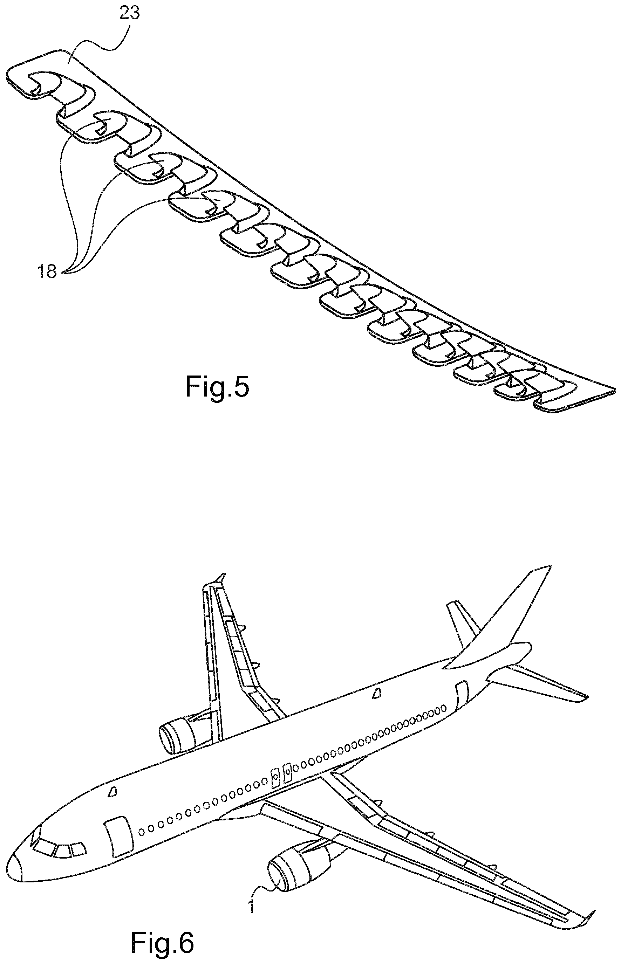

Le déflecteur 18 est riveté et collé directement sur la paroi de la lèvre 7. Alternativement, le déflecteur peut être obtenue par emboutissage de la tôle formant la lèvre, par exemple lors de la formation des orifices 13 enveloppés par les déflecteurs 18. Comme montré sur la figure 5, plusieurs déflecteurs 18 peuvent-être formés, par exemple par emboutissage, sur une plaque 23 qui est montée, par exemple par rivetage et collage, en relation avec un groupement d'orifices 13 de façon à ce que chaque déflecteur 18 soit positionné comme indiqué ci-dessus par rapport à l'arête aval 19 de son orifice 13 respectif. Cette configuration facilite le montage des déflecteurs.

La figure 6 montre un aéronef équipé de groupes propulsifs (1) présentant un système NAI comprenant des déflecteurs selon l'invention tels que décrits ci-dessus.

La combinaison des avantages obtenus par les différents aspects de l'invention décrits ci-dessus permet de réduire significativement la génération du bruit tonal jusqu'à le supprimer dans le meilleur des cas.

Comme indiqué dans la description qui précède, les différentes caractéristiques de l'invention et notamment du déflecteur peuvent-être mis en œuvre isolément ou sous toute forme de combinaison selon le contexte et dans des variantes de configurations différentes de celles décrites ci-avant.

## Revendications

1. Système de dégivrage de groupe propulsif d'aéronef, implanté dans une lèvre (7) entourant une entrée d'air (6) d'un groupe propulsif (1), ladite lèvre (7) s'étendant entre une paroi extérieure (8) d'une du groupe propulsif (1) et un conduit intérieur (5) canalisant l'air vers une soufflante disposée en aval de l'entrée d'air (6) du groupe propulsif (1), ledit système comportant :
• une canalisation périphérique (11) constituée par une cavité formée dans ladite lèvre (7), disposée autour du conduit intérieur (5) du groupe propulsif (1) et adaptée à assurer la circulation autour de l'entrée d'air (6) d'un flux de gaz chaud qui y est injecté,
• au moins un orifice (13) formé sur une paroi latérale de ladite canalisation (11) et par lequel ledit flux de gaz chaud pressurisé s'en échappe vers l'air (16) s'écoulant le long de la paroi extérieure (8) ou du conduit interne (5) du groupe propulsif (1),
**caractérisé en ce que** ledit système de dégivrage comprend en outre :
• un déflecteur (18) positionné au bord d'une arrête aval (19) de l'orifice (13) par rapport au sens d'écoulement de l'air (16) ; ledit déflecteur (18) s'étendant vers l'intérieur de la canalisation (11), étant orienté perpendiculairement à la direction générale d'écoulement de l'air (16) et formant un angle par rapport à ladite paroi latérale de la canalisation (11) le long de laquelle s'écoule l'air (16), afin de dévier vers l'extérieur dudit orifice (13) des tourbillons (17) formés dans la couche de cisaillement de l'air (16) au droit de chaque orifice (13).

2. Système de dégivrage de groupe propulsif d'aéronef selon la revendication 1, **caractérisé en ce que** l'angle (21) et la hauteur (20) dudit déflecteur (18) par rapport à ladite paroi latérale de la canalisation (11) sont définis pour minimiser d'une part la déformation des tourbillons (17) lorsqu'ils rencontrent l'arête avale (19) et d'autre part l'effet d'obturation dudit orifice (13).

3. Système de dégivrage de groupe propulsif d'aéronef selon la revendication 2, **caractérisé en ce que** la hauteur (20) dudit déflecteur (18) est supérieure ou égale au diamètre des plus gros tourbillons (17) lorsque mesuré perpendiculairement à la direction générale d'écoulement de l'air (16).

4. Système de dégivrage de groupe propulsif d'aéronef selon l'une des revendications 2 ou 3, **caractérisé en ce que** l'angle (21) formé par ledit déflecteur (18) avec ladite paroi latérale de la canalisation (11) a une valeur comprise entre 0° et 90°, préférablement 45°.

5. Système de dégivrage de groupe propulsif d'aéronef selon l'une des revendications précédentes, **caractérisé en ce que** le déflecteur (18) enveloppe ledit orifice (13) sur un tiers à un demi de son pourtour.

6. Système de dégivrage de groupe propulsif d'aéronef selon l'une des revendications précédentes, **caractérisé en ce que** le déflecteur (18) a une forme incurvée correspondant à la forme de la partie de l'orifice (13) qu'il enveloppe et/ou présente un renfort (22) formé à sa base.

7. Système de dégivrage de groupe propulsif d'aéronef selon l'une des revendications précédentes, caractérisé en que ledit déflecteur (18) est riveté et collé directement sur une surface intérieure de la paroi latérale de la canalisation périphérique (11) au travers de laquelle est formé l'orifice (13).

8. Système de dégivrage de groupe propulsif d'aéronef selon l'une des revendications précédentes, **caractérisé en ce que** plusieurs déflecteurs (18) sont formés sur une plaque (23) montée en relation d'un groupement de plusieurs orifices (13).

9. Système de dégivrage de groupe propulsif d'aéronef selon l'une des revendications précédentes, caractérisé en que le ou les orifices (13) sont généralement situés sur la paroi extérieure (8) et/ou sur la partie externe de la lèvre (7) du groupe propulsif (1).

10. Groupe propulsif d'aéronef comprenant :
• une motorisation (3) implantée dans une nacelle (2),
• ladite nacelle (2) présentant une entrée d'air (5) pourvue d'une lèvre (7) s'étendant entre une paroi extérieure (8) et une paroi intérieure (6) de la nacelle (2),
• ladite paroi intérieure (6) formant un conduit intérieur canalisant l'air vers la motorisation (3) disposée en aval de l'entrée d'air (5), **caractérisé en ce qu'**il comprend en outre un système de dégivrage tel que défini dans l'une des revendication précédentes.

11. Aéronef **caractérisé en ce qu'**il comprend au moins un groupe propulsif tel que défini dans la revendication 10.
